Europäisches Patentamt

European Patent Office

Office européen des brevets

(11) Publication number: **0 301 139**
**A1**

## EUROPEAN PATENT APPLICATION

(21) Application number: **87306718.5**

(22) Date of filing: **29.07.87**

(51) Int. Cl.⁴ **F02M 37/22 , B01D 17/02 , C10G 33/06**

(43) Date of publication of application:
**01.02.89 Bulletin 89/05**

(84) Designated Contracting States:
**AT BE CH DE ES FR GB GR IT LI LU NL SE**

(71) Applicant: **BOWSER FILTRATION LIMITED**
**23 Mitcham Industrial Estate Streatham Road**
**Mitcham Surrey CR4 2AP(GB)**

(72) Inventor: **Knight, Noel E**
**"Rowans" 130 Harestone Valley Road**
**Caterham Surrey CR3 6HG(GB)**

(74) Representative: **Bayliss, Geoffrey Cyril et al**
**BOULT, WADE & TENNANT 27 Furnival Street**
**London EC4A 1PQ(GB)**

(54) Fuel filter and dehydrator element.

(57) The disclosure relates to a fuel filter/dehydrator element (10) having a coalescing layer (22, 26, 32) to coalesce into droplets water in fuel passing through and an absorptive layer (28, 34) downstream of the coalescing layer (22, 26, 32) to absorb water droplets but permit fuel flow, the absorptive layer (28, 34) decreases in permeability as it becomes saturated with water to cut down or cut off the fuel flow. In order to provide a substantially increased impedance to the flow of water droplets in preference to the flow of fuel a hydrophobic and oleophilic layer (24) is disposed between the coalescing (22, 26, 32) and absorptive (28, 34) layers. In addition a fuel permeable hydrophobic layer (29, 35) is disposed immediately downstream of the or each absorptive layer (28, 34) to support the latter is it becomes saturated with water.

## FUEL FILTER AND DEHYDRATOR ELEMENT

This invention relates generally to a fuel filter dehydrator element, and particularly, but not exclusively, to a fuel filter dehydrator element for use with an aviation fuel supply system which automatically shuts off fuel flow upon saturation of the filter dehydrator with water.

Specifically the invention relates to a fuel filter dehydrator element having a coalescing layer of material to coalesce water in the fuel passing therethrough into droplets, and absorptive layer of material down stream of the coalescing thereto absorb water droplets but permit fuel flow, the absorptive layer decreasing in permeability as it becomes saturated with water to cut down or cut off the fuel flow. EP-A-0203703 discloses one such fuel filter dehydrator element having a coalescing layer to coalesce into droplets water in fuel passing therethrough and an absorptive layer downstream of the coalescing layer to absorb water droplets but permit the fuel flow. The absorptive layer decreases in permeability as it becomes saturated with water to cut down or cut off the fuel flow. EP-A-0203703 discloses one such fuel filter/dehydrator element having a coalescing layer to coalesce into droplets water in fuel passing therethrough and an absorptive layer downstream of the coalescing layer to absorb water droplets but to permit fuel flow. The absorptive layer decreases in permeability as it becomes saturated with water to cut down or cut off the fuel flow and a hydrophobic/oleophilic layer is disposed between the coalescing and absorptive layers. The hydrophobic/oleophilic layer provides a substantially greater impedance to the flow of water droplets than to the fuel.

In the course of field experience and test work on the above filter dehydrator elements, it has been found that under certain conditions of fuel flow rate, with high water concentration in the fuel, the performance of these elements in stopping the passage of water is diminished. It was found, for example, that if the element was run at full-rated fuel flow with a fuel/water content of 100 ppm until the differential pressure across the element reached 3.0 bar, the water transmission through the element was maintained at an acceptable level of 2.63 ppm. If continued, the differential pressure across the element would continue to increase to high pressures of 120 psi or more and the flow of fuel through the element would be virtually stopped with the water transmission through the element maintained within the acceptable limit of less than 15 ppm.

If, however, the test was conducted as described with full fuel flow at 100 ppm water concentration until the differential pressure across the element reached 3.0 bar after which the full flow through the element was reduced to 10% of the full fuel flowrate and the water content of the fuel was maintained to give a high water content of 1000 ppm, the element did not continue to behave in the same way. It was noted that the differential pressure across the element fell to a low figure when the fuel flow was reduced to 10% and the water transmission of the element was initially reduced. However, as time continued the differential pressure across the element slowly increased and eventually returned to the 3.0 bar level but only increased very slowly thereafter. Simultaneously, the water transmission through the element increased from the initial low level of 2-3ppm to a level in excess of the acceptance level of 15ppm before the differential pressure reached 3.0 bar again and it continued to increase further thereafter. The reason for this is believed to be as follows:-

The elements as described, embody a water absorbent paper like material of cross-linked carboxymethyl cellulose, such as manufactured by Daicel Chemical Industries of Tokyo, Japan, under the name of Jelfine R-820 for example. This material when embodied in the element is permeable to the flow of dry fuel but, when free water is present, the water is absorbed by the material causing the formation of a gel which reduces the permeability of the material to fuel flow with a resultant increase in differential pressure across the element.

Under normal circumstances, when the water content of the fuel is low, 100 ppm or less, a gel of sufficiently high viscosity and tenacity is created such that the rate of rise of differential pressure causes a rapid shut-down in the fuel flow and the water transmission is low. When the water content of the fuel is high, i.e. 1000 ppm, at 10% fuel flow the rise in differential pressure is slow and consequently a large amount of water is taken up by the absorbent media before the shut-down situation is reached. This is because, with a high accumulation of water in the absorbent material over a large period of time the resultant gel produced by the absorbent material has a lower viscosity and a lower tenacity thereby causing the absorbent material to become more permeable to the flow of fuel and less able to remove water. Similarly, if the absorbent material is advantageously supported on a hydrophilic material such as glass-fibre, as described in the above European Patent Specification, the low viscosity tenacity gel produced is attracted by the hydrophilic layer of glass-fibre and is absorbed into it, thus reducing the strength of the gel and causing discontinuity in it.

However it has been found, and this is the basis of the present invention, that if the water absorbent material is supported, with respect to the direction of fuel flow by a layer of fuel permeable by hydrophobic material of fairly small pore-size such as spun-bonded polypropylene, spun-bonded nylon, or polyester or P.T.F.E etc, between the absorbent material and the succeeding glass-fibre layer, with respect to the direction of fuel flow through the element, the problem described alone is presented. The reason for the success of the invention is that the preferred supporting material, being hydrophobic in nature does not permit the passage of the low viscosity and low tenacity gel formed when the absorbent material is saturated with excess water but retains it due to its hydrophobic nature and the fact that the pore-size of the preferred support material is smaller than the normal granule size of the resultant gel. Thus the gel film is maintained intact and it is not absorbed into the succeeding hydrophilic glass fibre layer as could otherwise be the case.

Thus the invention provides a fuel filter/dehydrator element having a coalescing layer to coalesce into droplets water in fuel passing there through and an absorptive layer down stream of the coalescing layer to absorb water droplets but permit fuel flow, the absorptive layer decreasing in permeability as it becomes saturated with water to cut down or cut off the fuel flow and a hydrophobic/oleophilic layer disposed between the coalescing and absorptive layers to provide a substantially greater impedence to the flow of water droplets than to the flow of fuel, characterised in that a layer of fuel permeable hydrophobic material is provided on the down stream side of the water absorptive layer to support the absorptive material when saturated with excess water.

Preferably the layer of hydrophobic material has a pore size smaller than nominal granule size of the gel formed by obsorptive layer when saturated with water to support the water absorptive layer when totally saturated.

In one particular construction, the layer of hydrophobic material is disposed between the layer of water absorptive material and a succeeding glass layer of woven glass fibres in the direction of flow of fuel through the filter.

The hydrophobic material may be a spun-bonded polypropylene, spun-bonded nylon or polyester of P.T.F.E.

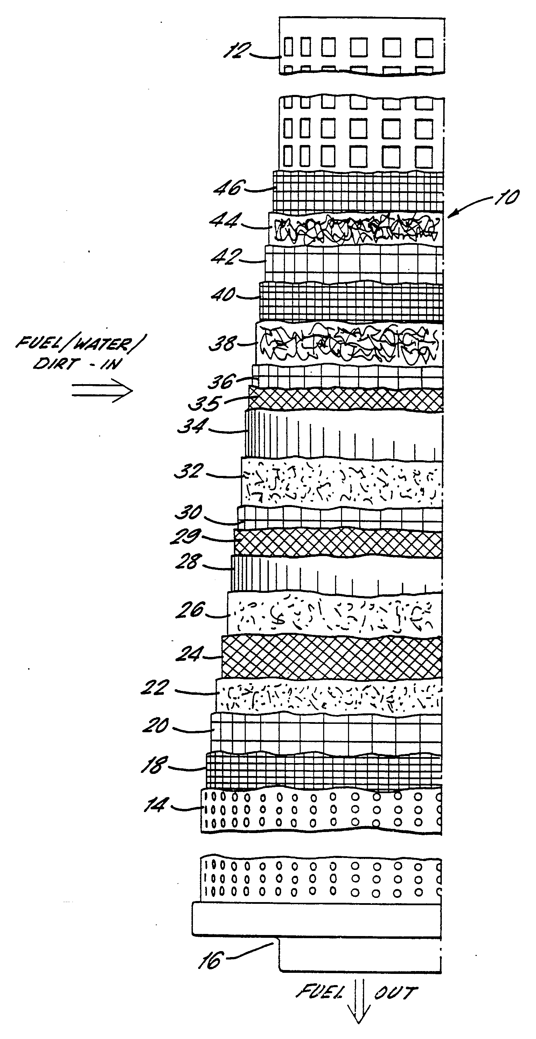

The following is a description of a specific embodiment of the present invention, reference being made to the accompanying drawing, which is a partially cut away side view of a fuel filter/dehydrator element according to the present invention.

Referring to the drawing, the element 10 comprises a plurality of wound layers of material between an inner cylindrical perforated former 12 and an outer cylindrical perforated sleeve 14 with caps 16 at either end of the element one of which is shown in the drawing. The former 12, sleeve 14, caps 16 and the method of winding the layers are conventional. Fuel to be filtered and dehydrated is red radially inwardly through the sleeve 14, whence it passes through the layers and the former 12, and then leaves the element through one of the end caps. A plurality of the elements 10 may be mounted in a common filter housing.

The layers in the element 10 consist of the following:

    * 18 - an outer PVC fibreglass screen;
    * 20 - a polyester scrim;
    22 - a fibreglass coalescing layer;
    24 - a hydrophobic/olephilic layer;
    26 - a fibreglass re-coalescing layer;
    28 - a cellulose absorptive layer;
    29 - a hydrophobic layer of spun bonded polypropylene;
    * 30 - a polyester scrim;
    32 - a further fibreglass coalescing layer;
    34 - a further cellulose absorptive layer;
    35 - a hydrophobic layer of spun bonded polypropylene;
    * 36 - a polyester scrim;
    * 38 - a media migration barrier;
    * 40 - a media support layer;
    * 42 - a polyester scrim;
    * 44 - a further media migration barrier;
    * 46 - a further media support layer.

The layers listed above marked with an asterisk are conventional materials used in a conventional manner, and further description thereof is unnecessary.

The coalescing layers 22, 32 and the re-coalescing layer 26 are layers of fibreglass such as that sold by Owens-Corning Fibreglass Corporation of Toledo, Ohio, U.S.A. under the description FM-004 and may have a mass of 50 g/m$^2$, a fibre diameter of 1 micron and a thickness of 6mm.

The absorptive layers 28, 34 are formed from sheets of cross-linked carboxymethyl cellulose fibre such as that sold by Daicell USA Inc of Los Angeles, California, U.S.A. under the designation Jelfine R-820 and may have a mass of 90g/m$^2$ and a thickness of 170 microns.

The hydrophobic/oleophilic layer 24 is formed from a sheet of spun or thermally bonded filaments of polyester or polypropylene or nylon, or of precision woven nylon filaments with a silicone finish, or from PTFE coated fabrics or metal meshes. The layers 24 may be similar to the hydrophobic/oleophilic layers conventionally used in fuel/water separators, rather than dehydrators.

The hydrophobic layers 29, 35 are a spun bonded polypropylene of a small pore size to support the adjacent absorptive layers 28, 34. The pore size is smaller than the grannule size of the gel formed on the absorptive layers when saturated with water to maintain the gel film formed on the absorptive layers in tact. Spun bonded nylon, polyester or P.T.F.E. could be utilised in place of polypropylene.

In operation, fuel containing water and dirt is fed under pressure through the sleeve 14, the outer PVC fibreglass screen 18 acting to filter the dirt out of the liquid. As the fuel and water passes through the coalescing layer 22, the water is coalesced into droplets. The fuel which may still contain minute droplets then passes through the hydrophobic/oleophilic layer 24, but the larger droplets are held back by the hydrophobic/oleophilic layer 24. The fuel passes through the re-coalescing layer 26 and the absorptive layer to the further coalescing layer 32 where the majority of water remaining in the fuel is coalesced into droplets. Going back to the hydrophobic/oleophilic layer, the amount of water held back by that layer increases as time goes on until a stage is reached when water droplets pass through that layer despite the hydrophobic nature of the layer. The droplets may be divided up to some extent as they pass through the hydrophobic/oleophilic layer 24 and that is the reason for providing the re-coalescing layer 26. After re-coalescing, the droplets pass to the absorptive layer 28, where they are absorbed. As the amount of water absorbed by the absorptive layer 28 increases a pressure drop occurs across the absorptive layer which impedes the flow of fuel through the element 10, and thus the element automatically starts to cut-off. The pressure drop across the layer 28 is reacted by the inner former 12, the force being transmitted via the intervening layers 30 to 46 including the further coalescing layer 32. Thus, as cut-off commences, the further coalescing layer 32 is compressed and therefore water droplets are exhuded by that layer into the further absorptive layer 38. Likewise, the pressure drop across that layer 38 also increases, thus adding to the total pressure drop across the element and accentuating the cut-off effect.

The hydrophobic layer 29 next to and immediately downstream of absorptive layer 34 supports the absorptive layer as the latter becomes saturated with water. The gel layer formed on the absorptive layer may form grannules when absorbing water and the pore size of the hydrophobic layer is chosen to be smaller than such grannules. Thus the hydrophobic layer supports the gel layer formed on the absorptive layer. Hydrophobic layer 37 supports absorptive layer 34 in a similar manner.

Further pairs of coalescing and absorptive layers may be included in the element downstream of the layers 32, 34.

the filter system in which the element is used may rely solely on the cut-off effect of the element to prevent fuel flow once the element has become saturated with water and is in need of replacement. Alternatively, a pressure sensor may be used to detect when the pressure drop across the element has increased to a predetermined level, and a control unit may then operate a valve to close off the fuel supply to the element.

## Claims

1. A fuel filter/dehydrator element having a coalescing layer (22) to coalesce into droplets water in fuel passing therethrough, one or more absorptive layers (28,34) downstream of the coalescing layer to absorb water droplets but permit fuel flow, the absorptive layer decreasing in permeability as it becomes saturated with water to cut-down or cut-off the fuel flow, and a hydrophobic/oleophilic layer (24) disposed between the coalescing and absorptive layers, the hydrophobic/oleophilic layer providing a substantially greater impedence to the flow of water droplets than to the flow of fuel, characterised in that a further fuel permeable hydrophobic layer (29, 35) is disposed immediately on the downstream of the or each absorptive layer (28, 34) to support the latter as it becomes saturated with water.

2. A filter/dehydrator element as claimed in Claim 1, and where the absorptive layer (28, 34) forms a gel layer on saturation with water having a certain granule size, characterised in that the hydrophobic layer (29, 35) is formed with a pore size less than the granule size of the gel layer to support the gel layer.

3. A fuel filter/dehydrator element as claimed in Claim 1 or Claim 2, characterised in that the or each further hydrophobic layer (28, 34) comprises spun bonded polyproplene, spun bonded nylon polyester of P.T.F.E.

4. A fuel filter/dehydrator element as claimed in any of the preceding claims, characterised in that the or each hydrophobic layer (29, 35) is disposed between an absorptive layer (28, 34) and a further woven support layer (30, 36).

5. A fuel filter/dehydrator element as claimed in Claim 4, charcterised in that the further support layer (30, 36) comprises a woven layer of glass fibres.

12

46
44
42
40

FUEL/WATER/
DIRT - IN

⟹

38
36
35
34

32

30
29
28

26

24

22

20

18

14

16

FUEL OUT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | EP-A-0 203 703 (KEENE INTERNATIONAL LTD) <br> * Abstract; page 4, line 21 - page 6, line 2; claims 1-3; figures * | 1-3 | F 02 M 37/22 <br> B 01 D 17/02 <br> C 10 G 33/06 |
| Y | GB-A-2 080 697 (VELCON FILTERS INC.) <br> * Abstract; figure 2; page 2, line 106 - page 3, line 115 * | 1-3 | |
| A | EP-A-0 177 118 (KEENE INTERNATIONAL LTD) <br> * Abstract; page 4, line 13 - page 5, line 25; page 6, lines 15-27; page 7, line 21 - page 8, line 9; claims 1,2,10-13; figure 2 * | 1 | |

TECHNICAL FIELDS SEARCHED (Int. Cl.4)

B 01 D
F 02 M
C 10 G

The present search report has been drawn up for all claims

| Place of search | Date of completion of the search | Examiner |
|---|---|---|
| THE HAGUE | 05-02-1988 | VAN IDDEKINGE R.E. |

EPO FORM 1503 03.82 (P0401)